(19) Europäisches Patentamt / European Patent Office / Office européen des brevets

(11) **EP 4 528 680 A1**

(12) **EUROPEAN PATENT APPLICATION**

(43) Date of publication:
26.03.2025 Bulletin 2025/13

(21) Application number: 23382972.0

(22) Date of filing: **25.09.2023**

(51) International Patent Classification (IPC):
*G06V 40/10* (2022.01)   *G06V 40/20* (2022.01)

(52) Cooperative Patent Classification (CPC):
**G06V 40/103; G06V 40/20; G06V 40/23**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ficosa Automotive, S.L.U.**
**08028 Barcelona (ES)**

(72) Inventors:
• **MIRANDA HERRERO, Alejandro**
**08028 BARCELONA (ES)**
• **PÉREZ-BENITO, Cristina**
**08028 BARCELONA (ES)**
• **PUJOL SALIDO, David**
**08028 BARCELONA (ES)**
• **JEVTIC, Aleksandar**
**08028 BARCELONA (ES)**

(74) Representative: **ZBM Patents - Zea, Barlocci & Markvardsen**
**Rambla de Catalunya, 123**
**08008 Barcelona (ES)**

(54) **SYSTEM AND METHOD FOR PREDICTING A FUTURE POSITION OF AN OBJECT**

(57) The method for predicting a future position of an object comprises capturing a video feed including a two-dimensional (2D) image data; detecting an object in the two-dimensional (2D) image data; obtaining a pose of the object which comprises a plurality of key points; generating a history of poses of the object; determining movement characteristics of two or more key points of the object; obtaining a predicted position data of each of the two or more key points by at least estimating an estimated state of each of the two or more key points based on the movement characteristics and the history of poses; and predicting a future position of at least a predefined representative point of the object from the predicted position data, wherein said future position is predicted on a two-dimensional (2D) image data of the video feed.

FIG. 5

EP 4 528 680 A1

**Description**

The present disclosure relates to a method for predicting a future position of an object such as a living being based on two-dimensional (2D) camera vision. Further, it is disclosed a system operated by said method.

BACKGROUND

It is estimated that more than half of all traffic fatalities are pedestrians on public roads. Therefore, one of the current safety challenges that Advance driver-assistance systems (ADAS systems) are intended to address are those related to vulnerable users, especially pedestrians.

Motor vehicles already include ADAS systems with a variety of features for safety and accident prevention. In fact, current ADAS systems comprise a set of sensors and devices that allow for the implementation of these features being pedestrian detection a key feature. Thus, pedestrian detection systems may enable ADAS systems to proactively avoid collisions and activate emergency braking mechanisms.

Nowadays, pedestrian detection systems may be currently provided with vision cameras, stereo cameras, LIDARs, radars, depth sensors plus computer vision/analysis software and the like.

However, in recent years, vehicle purchasing has been increasingly conditioned by price and safety. This particularly affects development of vehicles at the lower prices range, which face a challenge of being equipped with sophisticated sensors while maintaining low cost. As a consequence, the above-mentioned stereo cameras, LIDARs, radars, and depth sensors plus computer vision/analysis software may increase the cost of the pedestrian detection systems. Further, ADAS systems are becoming increasingly complex restricting their applications in simple hardware configurations.

Most prior art for predicting a future position of a pedestrian are configured to use 3D information or depth information by at least combining signals from two or more of 3D camera arrangements, LIDARs, radars, depth sensors, GPS and so on. Thus, most prior art are not only based on images captured by a simply 2D vision camera.

US20210150193 A1 discloses a method for recognizing the movement intention of a pedestrian from camera images. It detects the pedestrian in at least one camera image with an object detector, determines a skeleton-like model of the detected pedestrian to serve as a representation of the pose of the pedestrian, obtains thus the pose of the detected pedestrian using a pedestrian model, classifies the movement profile of the detected pedestrian, and outputs the class that describes the movement intention of the object. It fails to disclose a method for predicting a future position of an object, e.g. pedestrian.

Further, the Kalman filter is known in the field of computer vision for tracking objects and performing predictions and correction tasks in 2D images of a video feed. The Kalman filter may be employed for predicting and correcting the future position of rigid objects. However, no prior art is known by the applicant for predicting the future position of a pedestrian considereing his/her pose.

**SUMMARY**

It is an object of the present invention to provide a method for predicting a future position of an object comprising:

- capturing a video feed including two-dimensional (2D) image data;

- detecting an object in the two-dimensional (2D) image data;

- obtaining a pose of the object which comprises a plurality of key points;

- generating a history of poses of the object;

- determining movement characteristics of two or more key points of the object;

- obtaining a predicted state data of each of the two or more key points by at least estimating an estimated state of each of the two or more key points based on the movement characteristics and the history of poses; and

- predicting a future position of at least a reference point of the object from the predicted state data, wherein said future position is predicted on a two-dimensional (2D) image data of the video feed.

The future position of the reference point is a position that the reference point is predicted to have at a predefined time. As stated below, said predefined time may be of between one and three seconds. Therefore, the present method is configured to predict the location that the object will have in approximately two seconds on a two-dimensional (2D) image data of the video feed.

The step of predicting the future position may be performed by a position prediction module deployed on a platform as explained further below. The position prediction module may comprise a Kalman filter configured to receive the predicted state data, e.g. position, velocity and acceleration, of two or more key points of the object in a two-dimensional (2D) image data. Preferably, the object may be a movable object, e.g. a living being. More preferably, a key point is a joint of a living being, e.g. the a human being. The two or more key points comprises a first key point and a second key point. Further, the two-dimensional (2D) image data extends on a horizontal axis and on the vertical axis. Consequently, the predicted state data may comprise the following information, e.g. items, for the first key point: a position on the horizontal axis, a position on the vertical axis, a velocity on the horizontal axis, a velocity on the vertical axis, and preferably, an acceleration on the horizontal axis, and an acceleration on the vertical axis. Also, the predicted state data may comprise the following information, e.g. items, for the second key point: a position on the horizontal axis, a position on the vertical axis, a velocity on the horizontal axis, a velocity on the vertical axis, and preferably, an acceleration on the horizontal axis, and an acceleration on the vertical axis. Said items may be arranged in the form of a state vector. This is, the predicted state data may comprise the state vector that, in turn, comprises the speed, velocity and acceleration of each key point in the two-dimensional (2D) image data. The step of predicting a future position of reference point may comprises the step of extrapolating the state vector, preferably with the transition matrix of the Kalman filter.

The video feed may be captured by a vision camera for a vehicle. In fact, the vision camera may be arranged on a bodywork of a motor vehicle. The vehicle vision camera may preferably capture a field of view encompassing an exterior front area of the motor vehicle. More preferably, the vision camera may comprise a front-facing monocular camera, but other applications are of course possible within the meaning of the present disclosure. For example, the vision camera may be for a surrounding view system or top-view system among other applications. Also, the video feed may comprise a plurality of sequential two-dimensional (2D) image data, e.g. images. Preferably, the video feed may comprise at least two image frames, more preferably, three image frames. It may be preferred the vision camera to have a frame rate of at least fifteen frames per second (15 fps). Further, the above-mentioned step of detecting the object in the two-dimensional (2D) image data may be performed in a first image frame, wherein the step of estimating the estimated state of each of the two or more key points may also be performed on a subsequent second image frame. Furthermore, the future position of the reference point of the object is also predicted on an image frame that is subsequent to the first image frame.

The vision camera is a simple 2D camera which does not include a three-dimensional (3D) camera, time-of-flight (TOF) camera, sensor fusion, or any device sensing depth. This is, two-dimensional (2D) image data does not include three-dimensional (3D) image data nor depth information. The simple 2D camera allows to reduce the complexity of the present method and also the system where the present method is incorporated. Also, a cost reduction may be achieved. It should be emphasized that no Global Positioning Signal (i.e. GPS signal) or any other positioning signal or any input containing depth information needs to be provided to the present method in order to predict the future position of the object on a image frame of the video feed.

An object may be detected in the captured two-dimensional (2D) image data by the use of a deep learning model. It is preferred that a plurality of objects may be detected in said captured two-dimensional (2D) image data by the use of the deep learning model.

In any case, the object may be preferably detected in association with a bounding box. The bounding box, also known as a bounding region, is a geometric shape that encloses or surrounds the object, or more optionally, a group of objects, in the two-dimensional (2D) image data. Preferably, the bounding box is rectangular or square but different shapes are of course possible. The bounding box may be served as a guideline point for the detected object and create a collision box for said object. The reference point may be predefined in the bounding box as explained below.

It is preferred that the method further comprises the step of classifying the object such that the object is assigned to a specific object class. Therefore, the present method may detect two or more objects in the same two-dimensional (2D) image data, wherein a first object is assigned to a first object class and a second object is assigned to a second object class. An object class is the grouping of objects that may be described in terms of the attributes its members have in common. For example, an object may be a movable object. Preferably, the movable object may be distinguished between a movable article and a living being. The movable article and the living being have in common that both are moving or may be moved in the near future, i.e. the object will move quite soon, for example, within the next four second, preferably, within the next two seconds. In turn, the living being may be a sub-class including animals and human beings, e.g. pedestrians. Further, an object class or sub-class within the human beings category (or generic class) may be, for example, men, adults, children, and people with reduced mobility such as a disabled person. In this case, when the object class is a human being may have certain things in common. For instance, a person can move, e.g. cross the street, by moving at least a part of the human body when intends to do so.

Preferably, the above-mentioned detecting the object and obtaining the pose are obtained in a single step of the deep learning model. More preferably, the present method may obtain with a single deep learning model and with the same step (i.e. one-stage) the following:

(i) a detection of the object (e.g. pedestrian) in the bounding box; and

(iii) the pose of the object (e.g. pedestrian).

The pose may comprise a plurality of key points linked or connected to each other. The pose of the (detected) object represents at least the position and orientation thereof in two dimensions, i.e. on the two-dimensional (2D) image data. The pose may be stored internally as transformation matrices or measurement matrices. Thus, the pose may preferably be a lightweight versatile solution to detect the position and orientation of the body's position of a living being in real time, i.e. at one moment in time. Preferably, if the object is a living being such as a pedestrian, the pose may describe the body's position of the living being at one moment in time with a set of skeletal landmark points also referred herein as the plurality of key points. More preferably, the key points correspond or represent joints of the human body. The pose may be a kinematic model.

Kinematic model, also called the skeleton-based model, is used in the present invention for 2D pose estimation. This flexible and intuitive human body model includes a set of joint positions and limb orientations to represent the human body structure. Therefore, skeleton pose estimation model may be used to capture the relations between different body parts.

It may thus be preferred that the key points of the plurality of key points are connected to form a skeleton-like representation of a living being. Further, the plurality of key points comprises two or more key points and an adjacent key point such that the two or more key points are connected to the adjacent key point. In fact, the two or more key points may comprise at least a first key point and a second key point connected to each other. Also, the first key point is connected to the (first) adjacent key point. Further, the plurality of key points may comprise a second adjacent key point connected to the second key point. In this way, the present method allows to predict and track the location of the living being as explained below.

The bounding box may comprise a reference point. Preferably, the reference point of the bounding box may be predefined in a particular region of the bounding box. This is, the reference point may be a predefined representative point of the bounding box. More preferably, the predefined representative point may be located in the center of the bounding box. Other locations are not ruled out. Further, the representative point is not a key point nor is it part of the plurality of key points. It is preferred that a certain distance may exist between the presentative point and the above-mentioned key points. Additionally, the reference point may be fixed, i.e. not movable, within the bounding box. Instead, the two or more key points have a movement within the bounding box. In fact, each of the two or more key points may move relative to each other. This is, each key point as being or represent a joint of a living being may have a position, velocity or preferably an acceleration different to each other and within the bounding box.

It is preferred that the present method comprises comparing the detection(s) of the object(s) with the previous detection(s) from previous frames. Further, each detected object may be tracked through different image frames. It is more preferred assigning an identification code also known as unique identifier (UID) to the tracking detection(s).

Preferably, the above-mentioned history of poses of the object may be generated in real time for each object. This is created from the association of the set of incoming detections (bounding box + pose estimation) and the active entities with a specified UID. This allows to approximate the motion characteristics and model the weights of certain key points for prediction considering the reliability of the associated previous detections.

Preferably, the above-mentioned movement characteristics may comprise a position, and a velocity of each of the two or more key points. More preferably, movement characteristics may comprise the position, the velocity, and an acceleration of each of the two or more key points in two-dimensional (2D) image data. It is even more preferred determining movement characteristics of the adjacent key point, and even more preferred for the second adjacent key point. This is, the movement characteristics of the first key point may comprise the position, velocity and acceleration of the first key point. The movement characteristics of the second key point may comprise the position, velocity and acceleration of the second key point. The movement characteristics of the (first) adjacent key point may comprise the position, velocity and acceleration of the (first) adjacent key point. Further, the movement characteristics of the second adjacent key point may comprise the position, velocity and acceleration of the second adjacent key point. It may be even more preferred that the movement characteristics are determined or estimated for the plurality of key points. As stated above, the video feed may comprise a plurality of sequential two-dimensional (2D) image data. Thus, the above-mentioned key points may be identified or located in a first two-dimensional (2D) image data which may be tracked through a subsequent second two-dimensional (2D) image data. In this way the position and the speed may be determined.

Furthermore, the above-mentioned step of determining movement characteristics of two or more key points of the object may comprise the step of estimating the movement characteristics of two or more key points of the object in the two-dimensional (2D) image data, .Preferably, by performing an approximation of the velocity and acceleration of the object (e.g. pedestrian) on pixels scale.

As stated above, the predicted state data of each of the two or more key points is obtained by at least estimating an estimated state of each of the two or more key points based on the movement characteristics and the history of poses.

The predicted state data may comprise position, velocity and acceleration of the key points in two-dimensional (2D) data. Likewise, the estimated state may comprise position, velocity and acceleration of the key points in two-dimensional (2D) data. Therefore, the position includes two items: a position on the horizontal axis and a position on a vertical axis. Analogously, the velocity may include two items: a velocity on the horizontal axis and a velocity on a vertical axis. Likewise, the acceleration may include two items: an acceleration on the horizontal axis and an acceleration on a vertical axis. As the position, velocity, and acceleration may be performed on pixel scale, the predicted state data of each of the two or more key points is obtained without a GPS and depth information. In fact, predicted state data may be attained in the image reference system (e.g. pixels per second).

Preferably, the step of obtaining the predicted state data may further comprise the step of estimating a future state of the adjacent key point. Said future state may include a future position of the adjacent key point or at least a parameter derived therefrom. More preferably, the future state of any adjacent key point may include a future position, velocity, and acceleration in two-dimensional (2D) image data. Furthermore, the predicted state data comprises a preliminary future state of each of the two or more key points that is obtained by the estimated state of each of the two or more key points and the future state of the adjacent key point. This allows to estimate human pose even in occluded scenarios, resulting in more robust and stable predictions compared to other solutions.

Preferably, the step of obtaining the predicted state data may further comprise the step of determining the confidence or certainty of the estimated position. This is, determining uncertainty by the confidence of the estimated state of each key point by adding or reducing the importance of the incoming detection. A value of confidence is obtained from the deep learning model and added to the position prediction adding or reducing the uncertainty used to predict the N+1 frame or N+X. Therefore, the preliminary future state may be further based on the confidence or certainty of the estimated state. Again, the preliminary future state may comprise position, velocity and acceleration of the key points on a two-dimensional (2D) image data. Therefore, the position includes two items: a position on the horizontal axis and a position on a vertical axis. Analogously, the velocity may include two items: a velocity on the horizontal axis and a velocity on a vertical axis. Likewise, the acceleration may include two items: an acceleration on the horizontal axis and an acceleration on a vertical axis.

Preferably, the step of obtaining the predicted position data may further comprise the step of assigning a weight of the estimated state. Therefore, the preliminary future state may be further based on the weight of the estimated state.

Preferably, the step of obtaining the predicted state data may further comprise the step of correcting the estimated state of each of the two or more key points so as to obtain a corrected state of each of the two or more key points. Alternatively, it is possible that the step of obtaining the predicted state data may further comprise correcting the above-mentioned preliminary future state or at least data derived from the estimated state.

More preferably, correcting the estimated state or the preliminary future state is obtained by performing a Kalman filter. The Kalman filter, also known as linear quadratic estimation (LQE), uses a series of measurements observed over time, e.g. estimated position or the preliminary future position of each of the two or more key points, that may include statistical noise and other inaccuracies, and produces estimates of unknown variables such as the corrected position of each key point that tend to be more accurate than those based on a single measurement alone, by estimating a joint probability distribution over the variables for each timeframe. Further, the Kalman filter keeps track of the estimated state of the estimated position or the preliminary future position (or any data derived from thereof) and the variance or uncertainty of said estimate. The estimate is updated using a state transition model and measurements.

Preferably, the step of obtaining the predicted state data may further comprise the step of predicting a predicted position of each of the two or more key points at a predefined time by extrapolating the corrected position. More preferably, said predefined time may be of between one and three seconds. It is even more preferred that said predefined time may be of between 1.5 seconds and 2.5 seconds, being approximately two seconds.

In short, the present method comprises a deep learning model that may be able to detect both position and pose of each living being, e.g. pedestrian. As explained above, the deep learning model may be configured to output the estimated state (e.g. estimated position, velocity, and acceleration) of each of the plurality of the key points based at least on the position and velocity of each of the plurality of the key points and the history of poses. Subsequently, a tracking based on two-dimensional (2D) image data may be performed for example, by employing a Kalman filter, so as to obtain the corrected position of the plurality of key points. The Kalman filter allows thus to increase the accuracy of the prediction of each of the plurality of key points. Said predictions by the Kalman filter are not substantially sensitive to occlusions, detection failures, and association challenges due to limited features. The present method is characterized in that the future position of the living being, e.g. pedestrian, may be dynamically predicted based not only on position or distance, but also on pose. It is achieved by predicting the future position of the reference point of the bounding box from the corrected position, the future position being approximately two seconds from the instant of time the video feed was captured.

Some or all above-mentioned steps may be executed by embedded software. Further, said embedded software may be incorporated into an embedded system. This embedded software may be simple running on an 8-bit microcontroller with a few kilobytes of memory with the suitable level of processing complexity determined with a Probably Approximately Correct Computation framework. As shown in the examples below, the embedded software that includes the deep learning model and the Kalman filter may be integrated in an embedded platform which is performing in real time.

It is an object of the present invention to provide a system for predicting a future position of an object that is operated by the above-mentioned method.

BRIEF DESCRIPTION OF THE DRAWINGS

Non-limiting examples of the present system and method for predicting a future position of an object will be described in the following, with reference to the appended drawings.

In the drawings:

Figure 1 is a pipeline of the present invention;
Figure 2 is an illustration showing a multi-class detection with pedestrians and motor vehicles;
Figure 3 is an example of two skeleton-like representations and two human beings, each human being surrounded by a skeleton-like representation;
Figure 4 is an example of the tracking module with multiple pedestrians;
Figure 5 is an example of a real-time prediction at a pedestrian crossing; and
Figure 6 is a diagram that illustrates the steps of a method according to an example of the present invention.

DETAILED DESCRIPTION OF EXAMPLES

With reference to the non-limiting examples shown in the figures of the drawings, a method for predicting a future position of an object is described herein as well as a system operated by said method.

Said method is computer implemented invention that is executed in an Advanced driver-assistance systems (ADAS) within the motor vehicle field. The claimed method focuses on safety, in particular regarding pedestrians and other vulnerable road users (VRUs). Further, the claimed method is deployed, e.g. embedded, on simple hardware configurations while keeping or even improving their accuracy and performance. It is configured to obtain a pedestrian position prediction based on deep learning, ready to be integrated in an embedded platform, e.g. Texas Instrument TDA4VM, performing in real time. In examples, the deep learning model is based on YOLO-Pose able to detect both position and pose of each pedestrian without constrains on the number of pose key points. Subsequently, a tracking (and association) based on a multidimensional Kalman filter is performed, which finally allows to make a dynamic prediction of the future position of pedestrians based not only on position or distance, but also on pose.

The present invention is thus related to a pedestrian detection, tracking, and position prediction method that allows vehicles to take better and timely actions in order to prevent possible collisions, thus contributing to reduce the accidents and improve overall pedestrian safety. It enables the anticipation of pedestrian movements within the 2D spatial image coordinates, i.e. on a two dimensional (2D) data of a video feed captured by a vision camera, e.g. camera arrangement. Consequently, it enables the prediction of the pedestrian's position within said two-dimensional (2D) data, enabling the ADAS system to proactively avoid collisions and activate emergency braking mechanisms as required.

The present invention differs from other prior art methods by focusing on pedestrian behavior rather than distance or location. This allows to estimate human pose even in occluded scenarios, resulting in more robust and stable predictions compared to other solutions.

The present invention is a comprehensive method and system that achieves precise state estimation of individual joint positions and generates accurate predictions of VRUs movements while addressing occlusion challenges. The present method and system may be used independently or seamlessly integrated into a data input pipeline, enhancing overall system effectiveness and adaptability, especially when integrated with other ADAS systems.

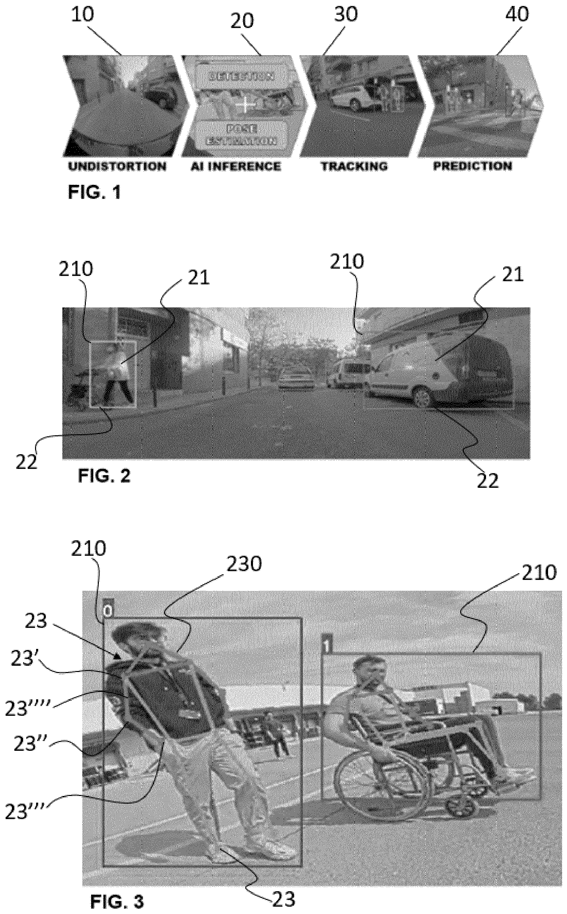

As explained, the present invention aims to track and predict the movement of detected moving object such as living beings, particularly, pedestrians. The present method comprises four modules: an image undistortion module 10, a human detection and pose estimation module 20, a pedestrian tracking module 30, and position prediction module 40, as depicted in Fig.1.

In examples, the video feed is captured 100 by a vehicle vision camera such as a front-facing monocular camera system as a cost-effective alternative to high-end sensor-based methodologies like stereo cameras, LiDAR and radar. The design ensures scalability and meets the stringent requirements of real embedded automotive hardware. The system comprises a monocular fish-eye camera and a Texas Instruments (TI) TDA4VM-based Electronic Control Unit (ECU) specialized in deep learning and computer vision.

The image undistortion module 10 is configured to rectify image distortions. Automotive cameras with wide field of view (FoV) are subject to distortions, disrupting detection tasks for pinhole cameras. It is addressed this by employing the Kannala method, a non-linear algorithm that rectifies distortion using pre-calculated lookup tables based on intrinsic camera parameters. This accurately determines how light rays are reprojected onto the sensor, simulating pinhole camera behavior and enabling observation of straight lines in the real world without compromising object sizes. In addition, the image undistortion module 10 enables to apply the proposed method over fisheye cameras, currently the most widely used in real ADAS systems. The results demonstrate enhanced regression metric accuracy and robust tracking performance when compared to analogous systems, offering a lightweight solution that can be easily deployed into real vehicle applications.

The present method and system are thus configured to predict pedestrian's future positions in 2D space using a minimum of four image coordinate samples per observed pedestrian. In examples, to achieve robust and stable state estimation, an observation time of 133 ms per pedestrian is required with a 30 FPS camera frame rate. This enables accurate predictions, crucial for rapid reaction in collision avoidance situations.

The human detection and pose estimation module 20, performed by the control unit where the deep learning is deployed, is configured to simultaneous detect different class types and extraction of pedestrian poses in a single inference. This approach maintains high prediction accuracy while allowing real-time implementation on cost-effective platforms.

In examples, a comprehensive data processing pipeline is developed, adapting input and output data for each module's needs. Modules are implemented in C++ and utilize deep learning accelerators on their respective platforms. The PC pipeline uses Nvidia's TensorRT, and the embedded TDA4VM platform uses TIDL-RT. This programming strategy optimizes performance and resource management during execution.

The human detection and pose estimation module 20 is configured to obtain the detection and pose of each pedestrian. In examples, it is proposed a custom AI model based on the YOLO-Pose developed by TI. The present method allows thus multi-class detection and the pose obtained is not constrained to a specific number of key points 23 or links 23"", unlike the original YOLO-Pose approach.

It is an objective to achieve a flexible and efficient technical solution applicable to various embedded platforms, prioritizing fast inference and a balanced accuracy. To achieve this, the method uses a YOLOv5s6-ti-lite model-a modified version with layer adjustments for compatibility with TI TDA4VM hardware. The model complexity of the present invention is advantageously reduced to enhance latency performance.

In examples, a first stage to achieve pose estimation is pedestrian detection. The trained model of the human detection and pose estimation module 20 may be configured to detect 210 eight classes: persons, cars, trucks, bicycles, motorcycles, buses, traffic signs, and traffic lights. This allows seamless integration with other modules needing detection of different classes, reducing latency compared to using multiple AI models. Other classes or different number of classes are of course possible. The inference of the human detection and pose estimation module 20 comprises a mechanism to remove unreliable and inaccurate detections by applying constraints on bounding box 22 dimensions, ensuring reliable detection results.

For enhanced detection reliability, the human detection and pose estimation module 20 uses two data sets: COCO and BDD100K. COCO, with 118K training and 5K evaluation images, is recognized for detection and pose tasks. BDD100K has 70K training and 10K evaluation images. By combining these data sets, our network achieves robust and accurate detections due to a comprehensive training environment.

The method of the present invention focuses on acquiring an adequate set of image-based features for each pedestrian, ensuring robust state estimation without additional expenses. By performing pose estimation 230, our system leverages interconnections between joints 23, increasing available features. Combining bottom-up and top-down approaches, we achieve both efficiency and accuracy. Adopting a single inference strategy for pedestrian detection enables effective handling of high-density scenarios without increasing execution latency.

Figure 3 shows an example of a skeleton that includes thirteen joints 23 and fourteen links. Pose configuration is determined by assigning weights 720 and incorporating standard deviation during coordinates regression to each key point 23. These weightings indicate the joint importance and contribution to the overall determination of the pose. The inclusion of standard deviation accounts for inherent variability and potential imprecision in joint position estimation.

The human detection and pose estimation module is further configured to merge the COCO and BDD100K data sets, removing neck, hands, and feet key points from BDD100K while adding a new head key point in COCO through triangulation of eyes, ears, and nose key points. Key points 23 are classified into three types based on occlusion level (clear, partially occluded, and occluded) to balance training weights effectively.

The method comprises the step of generating a history of poses of the pedestrian generated by the human detection and pose estimation module. The present method further comprises the step of determining moving characteristics such as position, velocity, and acceleration of the key points.

The method comprises the step of obtaining a predicted position data of the key points. In examples, said predicted position data is obtained at least by:

- estimating an estimated state of the key points based on the movement characteristics and the history of poses. As the key points are connected to form a skeleton-like representation of a human being (e.g. pedestrian), a key point is connected to an adjacent key point, wherein said key point may be, in turn, an adjacent key point for another key point.

- estimating a preliminary future state of the key points based on the estimated state of the key points and the future state of the adjacent key points.

- correcting the estimated state of the key points or a data derived from said estimated state such as the preliminary future position by performing a Kalman filter as explained below.

The pedestrian tracking module 30 includes a Kalman filter 400, e.g. first Kalman filter, for its effectiveness in achieving accurate and computationally efficient tracking. This approach allows the association of past predictions with current measurements, enabling stable paths and unique identifiers 430 for individual pedestrians. Despite more advanced deep learning solutions available, the Kalman filter 400 was chosen to maintain real-time tracking performance without sacrificing accuracy, tracking only a predefined point of the bounding box, e.g. the centroid of the bounding box, of the detected pedestrian to reduce the complexity of the motion model. In examples, said predefined point of the bounding box may be the reference point.

The Kalman filter, e.g. the first Kalman filter, is employed to predict the future position of pedestrians, e.g. the position of the predefined point of the bounding box, and associate these predictions with corresponding detections. The Kalman filter is a widely-used method for estimating the state of objects in systems affected by measurement noise. In our approach, the reference position for each pedestrian is defined as the centroid of the bounding box surrounding them.

The first Kalman filter of the tracking prediction module 30 uses a state vector to represent the current state of the prediction of each key point 23. The Kalman filter algorithm leverages this state vector to iteratively refine the prediction based on new measurements, ensuring robust and accurate tracking of pose of pedestrians in the system.

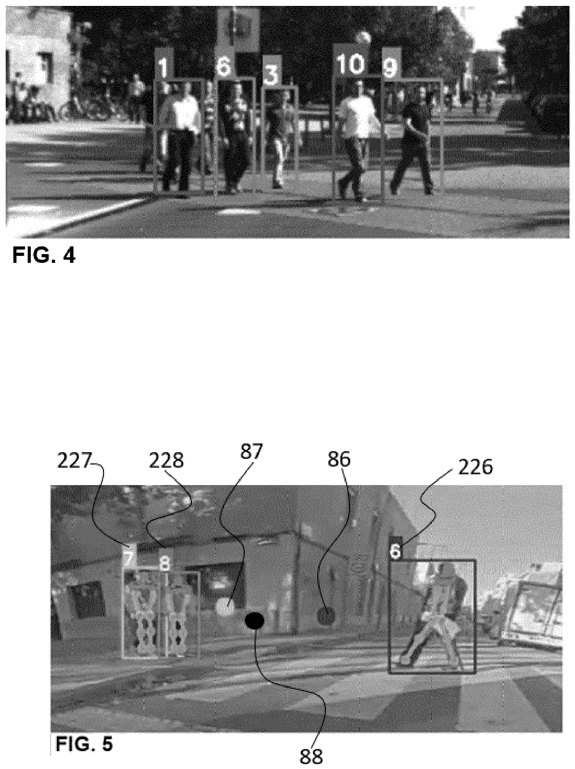

The association process involves evaluating proximity between new detections and existing tracked entities. Close detected bounding boxes are associated using matching with corresponding entities, updating state matrices and predicting future positions. The Hungarian algorithm optimizes matching between entities and detections, ensuring accurate associations in dense pedestrian environments, as illustrated in Fig.4. Unassociated detections create new entities, continuously adapting the tracking module to incorporate newly detected entities. Lost frames are added for unassociated detections, and if the count exceeds sixty, equivalent to a duration of two seconds at a frame rate of 30 fps, the entity is considered lost.

The position prediction module 40 integrates pose estimation and tracked pedestrian information to predict future pedestrian positions. Thus, the position prediction module 40 is configured to receive the estimated position of each key point 23 in the proposed pose. Processing the predicted pose, establishing a spatial reference, and applying area filters and proportion constraints to ensure accurate predictions while mitigating potential errors.

During the whole process, the Kalman filter of the future prediction module 40 uses a state vector to represent the current state of the prediction. This vector incorporates the position, velocity, and acceleration components for each coordinate, allowing to capture the dynamics of pedestrian movement accurately. The Kalman filter algorithm leverages this state vector to iteratively refine the prediction based on new measurements, ensuring robust and accurate tracking of pedestrians in the system.

The position prediction module 40 comprises a prediction Kalman filter for each pose, e.g. pedestrian's pose, based on the movement of each key point. It allows to enhance pedestrian prediction, improving system accuracy and reliability. Said prediction Kalman filter considers image coordinates, providing the position, i.e. the location on the horizontal and vertical axes, and providing velocity and acceleration estimations in each iteration. Individualized treatment for each pedestrian ensures accurate motion tracking, minimizing interference from other detected pedestrians.

In the described example, the prediction Kalman filter is efficiently handling all 13 key points of the pose. This involves parallel operations with large matrices. As indicated in the below equation (1), the state vector Xn comprises 78 items, including the 2D coordinates of the 13 key points along with their acceleration and velocity values.

$$x_n = \begin{bmatrix} \hat{x}_{n_1} & \dot{\hat{x}}_{n_1} & \ddot{\hat{x}}_{n_1} & \hat{y}_{n_1} & \dot{\hat{y}}_{n_1} & \ddot{\hat{y}}_{n_1} & \hat{x}_{n_2} & \dot{\hat{x}}_{n_2} & \ddot{\hat{x}}_{n_2} & \hat{y}_{n_2} \dots \end{bmatrix}^{\top} \quad (1)$$

It is proposed a solution to generate the transition matrix for prediction considering a time longer than the time between consecutive samples. As indicated in the below equation (1), the position prediction module 40 approximates the state transition matrix (Fprediction) to the N power to calculate the prediction.

$$F_{prediction} = F^N \quad (2)$$

Once the state transition matrix for a future time (Fprediction) is obtained, it is multiplied by the current state vector (Xn) to obtain a prediction of each key point for the specified time. As new incoming detections are obtained, the Kalman model is updated to adapt to the new conditions of each key point 23.

$$\hat{x}_{n+N,n} = F_{prediction}\hat{x}_{n,n} \qquad (3)$$

To achieve accurate predictions of pedestrian positions, a minimum observation time is set before initiating predictions. The observation time is calculated separately for each key point 23, considering only valid observations with confidence higher than a threshold (default value of 20%), to avoid abrupt changes between detections, that cause deviations in the motion model of the final pose.

In order to enhance the accuracy and reliability of pedestrian movement prediction, we suggest scaling the uncertainty of key points and augmenting the Kalman gain based on measurement confidence. Furthermore, we propose adjusting the measurement covariance matrix by considering covariance between adjacent key points in the proposed pose. This innovative strategy tailors the conventional Kalman filter for the skeletal scenario, prioritizing the interplay between joints for improved motion prediction, especially in situations involving occlusion or outliers.

In short, the present invention is a novel approach customizes the traditional Kalman filter for the scenario of skeletons, where the interconnection between joints plays a vital role in movement prediction. Therefore, once the estimated state of each key point has been obtained (or any data derived therefrom such as the above-mentioned corrected state), the estimated state of the key points is used in order to predict the future position of the reference key point, e.g. the centroid of the pose, which will be the one considered to be the midpoint of the pedestrian in the future. This reference point is the one considered to process the information and the output of the prediction algorithm.

The development focuses on the TDA4VM processor, designed by TI, which integrates Dual Arm® Cortex® A72, C7x DSP, and multimedia accelerators, targeting to diverse computer vision projects, particularly those in the automotive domain.

Once validated, the AI model has been deployed into the TI Deep Learning Library, optimizing it for inference on the C7x + MMA DSP. Latency is improved through mixed-precision quantization, using 8-bit precision for some layers and 16-bit for critical ones (first and last). This optimization accelerates the model by up to 2.2x, achieving an inference speed of up to 101 fps compared to the base version with 16-bit precision.

Module implementation targets TIOVX deployment, TI's version of the OpenVX v1.1 specification framework. Each sub-module functions as a black box component, allowing dynamic assignment to various hardware targets and supporting multi-processing. Supported hardware includes two DSPs C66x, one DSP C7X, two MCUs R5F, dual Arm Cortex-A72, and one GPU PowerVR.

The present invention has a high accuracy of the prediction of the future pedestrian position ensuring the real time execution of the method.

In examples, the well-known multi-object tracking KITTI data set has been select for its focus on the ADAS and its higher refresh rate (10 FPS) compared to other data sets. It contains 21 training sequences, which have been labelled with 8 different classes, including pedestrians, which is the only one to be taken into consideration.

The tracking method is evaluated using the Higher Order Tracking Accuracy (HOTA) metric, which combines localization, detection, and association into a single metric. To assess its performance, the tracking algorithm is compared to other real-time projects from the MOT top 50 of the KITTI data set, and the results are presented in Table \ref {tab:trackingComp}.

The OC-SORT algorithm uses one camera but is computationally demanding and unsuitable for embedded platforms. The Opm-NC2 and NC2 algorithms achieve high accuracy in object detection but require expensive setups with LIDAR data. CAT detects pedestrians from an image deep learning model and then matches them in 3D with a stereo camera. RMOT and NOMT-HM have a similar 2D camera setup as our approach but focus on modeling relative motion between objects.

Our proposed solution demonstrates superior detection accuracy compared to other state-of-the-art methods, as assessed by the LocA metric. It also outperforms alternative approaches with similar sensor setups in terms of the HOTA metric while maintaining efficient computational demands. These results validate the effectiveness of our approach for achieving real-time inference on resource-constrained platforms.

In short, the novel system and method is configured to detect, estimate pose, and predict the future position of pedestrians in the context of ADAS. To achieve this objective, it comprises a two-stage process: the first consists of a network of models to detect and estimate the pedestrian pose, and the second predicts the estimate of each pedestrian based on a Kalman filter with pose features.

The present invention has been designed to be implemented in an automotive embedded platform, achieving high-value metrics respect state-of-the-art methods using the equivalent sensor configuration, without compromising the execution latency of the full pipeline on PC and embedded TDA4VM platform. This design offers a flexible deployment capability to be integrated into existing systems without significant changes in terms of setup and computing platform required.

The present invention offers a robust, affordable system designed to be deployed in a short-term, thanks to its all-in-one approach to be a viable alternative in the current state of the automotive industry.

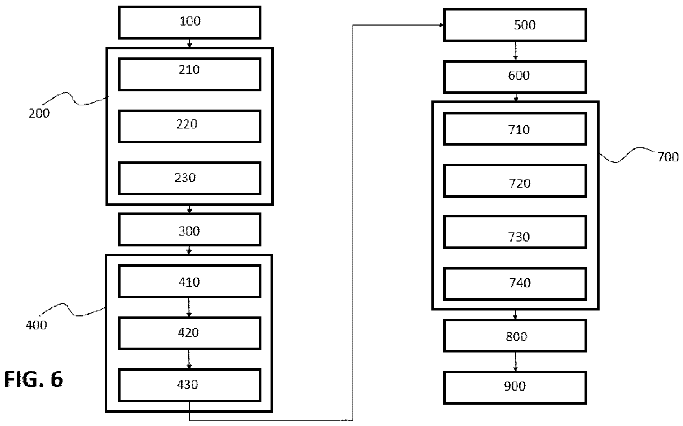

Figure 6 shows the steps according to an example of the present invention. As shown, this non-limiting example the method for predicting a future position of an object comprises the steps of:

- capturing a video feed 100 including a plurality of sequential two-dimensional (2D) image data through a vision camera arranged in a vehicle;

- correcting image distortion of the plurality of sequential two-dimensional (2D) image data by an image undistortion module 10;

- performing a single step of a deep learning model 200 for:

    (i) obtaining 210 a detection of an object 21 in a bounding box 22, the object 21 being a living being;

    (ii) obtaining 220 a reference point of the bounding box, particularly arranged in the center of the bounding box 22, and

    (iii) obtaining 230 a pose of the object comprising a plurality of key points 23 that includes two or more key points 23', 23" connected to each other through a link 23"", and an adjacent key point 23''' connected at least to one of the two or more key points 23', 23", wherein each key point 23 is or represents a joint of the living being, optionally, the key points of the plurality of key points 23 are connected to form a skeleton-like representation of the living being;

wherein it further comprises the step of classifying 300 the object 21 such that the object 21 is assigned to a specific object class, therefore, if a plurality of (different) objects 21 are detected on the two-dimensional (2D) image data, the method may be configured to classify the (different) objects 21 into different classifications such that each of the (different) objects 21 are assigned to the specific object class;

- comparing 410 the detection(s) of the object(s) with the previous detection(s) of the object(s);

- tracking 420 the detection(s) of the object(s), for example, by using a first Kalman filter 400 so as to track the reference point through the plurality of sequential two-dimensional (2D) image data;

- assigning 430 an identification code (UID) to the tracked detection(s) of the object(s) by using the first Kalman filter 400;

- generating 500 a history of poses of the object in real time through the plurality of sequential two-dimensional (2D) image data based on the identification code (UID) of the tracked detection(s);

- determining movement characteristics 600 (e.g. position, velocity, and optionally acceleration) of the key points 23, for example, of the two or more key points 23', 23" and the adjacent key point 23''' of the object;

- obtaining a predicted state data 700 of at least each of the two or more key points 23', 23" in a two-dimensional (2D) image data of the video feed by at least:

    (a) estimating 710 an estimated state of the key points, e.g. each of the two or more key points 23', 23" and optionally the adjacent key point 23''', based on the movement characteristics and the history of poses. The estimated state of the adjacent key point is referred herein as future state of the adjacent key point for reasons of clarity;

    (b) determining 720 the confidence of the estimated state of the key points, optionally, by assigning a weight for the estimated state of each key point such that each key point is given more importance according to the confidence of the estimated state;

    (c) estimating 730 a preliminary future state of the key points, e.g. each of the two or more key points, based on the estimated state or any data derived therefrom and the future state of the adjacent key point;

    (d) correcting 740 the estimated state or any data derived from the estimated state such as the preliminary future state so as to obtain a corrected position of each of the two or more key points, for example, by performing a second Kalman filter;

- predicting 800 a future position of a reference point of the object 86, 87, 88 based on the predicted state data, wherein said future position 86, 87, 88 is predicted in a two-dimensional (2D) image data of the video feed, wherein the future position of the reference point 86, 87, 88 is a position that the reference point is predicted to have at a predefined future time. Said predefined future time is of between one and three seconds. In particular, the future position 86, 87, 88 is predicted by a position prediction module 40. The position prediction module 40 is inputted with the predicted state data that comprises the state of a first key point 23' of the two or more key points and the state of a second key point 23" of the two or more key points. In turn, the state of the first key point 21" comprises a position on an horizontal axis, a position on a vertical axis, a velocity on the horizontal axis, a velocity on the vertical axis, and optionally, an acceleration on the horizontal axis, and an acceleration on the vertical axis. Further, the state of the second key point 23" comprises a position on the horizontal axis, a position on the vertical axis, a velocity on the horizontal axis, a velocity on the vertical axis, and optionally, an acceleration on the horizontal axis, and an acceleration on the vertical axis. More in particular, the position prediction module 40 comprises a predictive Kalman filter configured to receive the predicted state data, e.g. position, velocity and acceleration, of two or more key points 23', 23" of the object in a two-dimensional (2D) image data. The predicted state data is arranged in the form of a state vector; and

- displaying 900 the predicted future position 86, 87, 88 of the reference point by a display device and/or inputting the predicted future position 86, 87, 88 of the reference point to a (ADAS) system configured, for example, to prevent collisions between the detected object 21 and the vehicle and/or activate an emergency braking mechanism.

Although only a number of examples of the present electronic device and assembly method thereof have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. Reference signs related to drawings placed in parentheses in a claim are solely for attempting to increase the intelligibility of the claim, and shall not be construed as limiting the scope of the claim.

## Claims

1. A method for predicting a future position of an object, the method comprises:

    - capturing a video feed including a two-dimensional (2D) image data;
    - detecting an object in the two-dimensional (2D) image data;
    - obtaining a pose of the object which comprises a plurality of key points;
    - generating a history of poses of the object;
    - determining movement characteristics of two or more key points of the object;
    - obtaining a predicted state data of each of the two or more key points by at least estimating an estimated state of each of the two or more key points based on the movement characteristics and the history of poses; and
    - predicting a future position of a reference point of the object from the predicted state data, wherein said future position is predicted on a two-dimensional (2D) image data of the video feed.

2. The method of claim 1, wherein the future position of the reference point is a position that the reference point is predicted to have at a predefined future time, preferably, the predefined future time is of between 1 and 3 seconds.

3. The method of any preceding claim, wherein detecting the object and obtaining the pose are obtained in a single step of a deep learning model.

4. The method of any preceding claim, wherein it further comprises the step of classifying the object such that the object is assigned to a specific object class.

5. The method of any preceding claim, wherein the history of poses of the object are generated in real time.

6. The method of any preceding claim, wherein the movement characteristics comprises a position, a velocity, and an acceleration of each of the two or more key points.

7. The method of any preceding claim, wherein the object is associated to a bounding box, wherein the two or more key points have a movement within the bounding box, and the reference point is fixed within the bounding box being a predefined representative point of the bounding box, preferably, arranged in the center of the bounding box.

8. The method of any preceding claim, wherein the object is a living being, for example, a human being, preferably, a pedestrian.

9. The method of claim 8, wherein the key points of the plurality of key points are connected to form a skeleton-like representation of a living being, wherein the plurality of key points comprises the two or more key points and an adjacent key point such that the two or more key points are connected to the adjacent key point.

10. The method of claim 9, wherein obtaining the predicted state data further comprises the step of estimating a future state of the adjacent key point, wherein the predicted state data comprises a preliminary future state of each of the two or more key points that is obtained by the estimated state of each of the two or more key points and the future state of the adjacent key point.

11. The method of claim 10, wherein obtaining the predicted state data further comprises the step of correcting the estimated state or the preliminary future state so as to obtain a corrected position of each of the two or more key points.

12. The method of claim 11, wherein correcting the estimated state or the preliminary future state is obtained by performing a Kalman filter.

13. The method of any preceding claim, wherein obtaining the predicted state data further comprises the step of determining the confidence of the estimated state, and wherein the preliminary future state is further based on the confidence of the estimated state.

14. The method of claim 13, wherein obtaining the predicted position data further comprises the step of assigning a weight of the estimated state, wherein the preliminary future state is further based on the weight of the estimated state.

15. A system for predicting a future position of an object being operated by the method of any preceding claim.

UNDISTORTION    AI INFERENCE    TRACKING    PREDICTION

**FIG. 1**

**FIG. 2**

**FIG. 3**

FIG. 4

FIG. 5

**FIG. 6**

| | Europäisches Patentamt<br>European Patent Office<br>Office européen des brevets | **EUROPEAN SEARCH REPORT** | Application Number<br>**EP 23 38 2972** |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/150550 A1 (SHI XINWEI [US] ET AL) 18 May 2023 (2023-05-18) * the whole document * | 1-15 | INV.<br>G06V40/10<br>G06V40/20 |
| X | CN 111 860 269 A (UNIV NANJING AERONAUTICS & ASTRONAUTICS) 30 October 2020 (2020-10-30) | 1-10, 13-15 | |
| A | * the whole document * | 11,12 | |

| | | | TECHNICAL FIELDS SEARCHED (IPC) |
|---|---|---|---|
| | | | G06V |

The present search report has been drawn up for all claims

| Place of search | Date of completion of the search | Examiner |
|---|---|---|
| The Hague | 14 February 2024 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 2972

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2024

| Patent document cited in search report | | Publication date | Patent family member(s) | | Publication date |
|---|---|---|---|---|---|
| US 2023150550 | A1 | 18-05-2023 | EP 4181091 A1 | | 17-05-2023 |
| | | | US 2023150550 A1 | | 18-05-2023 |
| CN 111860269 | A | 30-10-2020 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20210150193 A1